# FASCICULE DE BREVET EUROPEEN

(11) **EP 3 390 207 B1**
(45) Date de publication et mention de la délivrance du brevet: **01.01.2020**
(21) Numéro de dépôt: 16815581.0
(22) Date de dépôt: 17.11.2016
(51) Int. Cl.: B62D 25/16, B62D 25/18

(54) **PARE-BOUE DE VEHICULE AUTOMOBILE AVEC UNE BAVETTE AERODYNAMIQUE**
KOTFLÜGEL EINES KRAFTFAHRZEUGS MIT EINER AERODYNAMISCHEN KLAPPE
MOTOR VEHICLE MUDGUARD HAVING AN AERODYNAMIC FLAP

(30) Priorité: 17.12.2015 FR 1562622
(43) Date de publication de la demande: 24.10.2018
(73) Titulaire: PSA AUTOMOBILES S.A., 78300 Poissy (FR)
(72) Inventeur: TAVERNIER, Luc, 25470 Trevillers (FR); ROBERT, Herve, 25200 Montbeliard (FR); AUBERT, Pascal, 78140 Velizy Villacoublay (FR); LORETTE, Frederic, 78960 Voisins Le Bretonneux (FR); GUESNEY, Emmanuel, 25700 Valentigney (FR)
(74) Mandataire: Fernandez, Francis Lionel
(86) Numéro de dépôt international: PCT/FR2016/052988
(87) Numéro de publication internationale: WO 2017/103362

(56) Documents cités:
- EP-A1- 2 008 918
- DE-A1-102008 061 560
- DE-A1-102014 206 364

## Description

L'invention a trait à un pare-boue de véhicule automobile. L'invention concerne également la fixation d'une bavette sur un pare-boue de véhicule. L'invention se rapporte également à un véhicule automobile muni d'un pare-boue à bavette aérodynamique.

Les passages de roues d'un véhicule automobile sont généralement équipés de pare-boue, ou garde-boue. Ces équipements comprennent une coque enveloppant partiellement une roue afin d'intercepter les projections survenant lors du déplacement du véhicule. De manière connue, un pare-boue est fixé à la structure du véhicule à l'aide de vis. En complément, le pare-boue peut être muni d'une bavette inférieure pour prolonger localement la forme de coque. Généralement, une telle bavette est fixée à la fois à la structure du véhicule et au pare-boue.

Le document de brevet FR 2,878,810 B1 divulgue un dispositif de fixation de bavette de véhicule automobile permettant à un concessionnaire automobile de monter ladite bavette sur un pare-boue qui est déjà monté sur son véhicule. La bavette est fixée sur le pare-boue au moyen d'une barrette par pincement du pare-boue entre la bavette et la barrette. La barrette présente des orifices destinés à recevoir au moins une vis de fixation s'étendant horizontalement pour plaquer la bavette contre le pare-boue et une partie sécable destinée à être séparée de la barrette pour recevoir une autre vis de fixation de la bavette s'étendant verticalement dans la carrosserie du véhicule. En complément, la bavette présente une patte de fixation liée au pare-chocs du véhicule afin d'assurer une fixation en Z, soit un maintien vertical. Ce dispositif de montage a pour objectif de faciliter le montage d'une bavette sur le véhicule tout en réduisant le coût de fabrication de l'élément de fixation de la bavette.

Toutefois, cette solution est complexe à mettre en œuvre ; tant en composants qu'en temps. Donc cette fixation reste onéreuse. De plus, elle requiert plusieurs zones de fixation sur la structure du véhicule, ce qui peut devenir inadapté à des espaces réduits et occupés par d'autres accessoires.

Dans EP 2 008 918 est décrit un ensemble pour roue de véhicule, l'ensemble comprenant un pare-boue avec une cloison décrivant généralement un demi-cercle, et qui délimite un espace interne destiné à recevoir une roue du véhicule et une bavette formant une paroi prolongeant la cloison du pare-boue vers le bas.

L'invention a pour objectif de résoudre au moins un des problèmes posés par l'art antérieur. Plus particulièrement, l'invention a pour objectif de simplifier la fixation d'une bavette sur un pare-boue de véhicule. L'invention a également pour objectif de proposer une fixation robuste. L'invention vise également une solution simple et économique.

L'invention a pour objet un ensemble pour roue de véhicule, l'ensemble comprenant : un pare-boue avec une cloison décrivant généralement un demi-cercle, et qui délimite un espace interne destiné à recevoir une roue du véhicule ; et une bavette formant une paroi prolongeant la cloison du pare-boue vers le bas ; remarquable en ce que la cloison comprend une patte de fixation destinée à être fixée à la structure du véhicule, et qui fait saillie par rapport à la cloison, et en ce que la bavette comprend un manchon emmanchée autour de la patte de fixation.

Selon des modes particuliers de réalisation, l'ensemble peut comprendre une ou plusieurs des caractéristiques suivantes :
- Le pare-boue comprend deux premières surfaces de contact, la bavette comprenant deux surfaces complémentaires qui sont disposées aux extrémités du manchon et qui sont chacune en contact d'une des deux premières surfaces de contact.
- La patte de fixation comprend une surface externe généralement conique, et le manchon comprend une surface interne généralement conique qui épouse sensiblement la surface externe conique.
- La cloison comprend deux surfaces opposées selon son épaisseur, dont une surface interne tubulaire et une surface externe généralement tubulaire, la patte de fixation s'étendant perpendiculairement depuis ladite surface externe.
- La bavette comprend une fente, la cloison comprenant une languette traversant la fente ; et la bavette et la cloison comprennent des bossages complémentaires imbriqués l'un dans l'autre.
- Le pare-boue comprend deux moitiés longitudinales et des moyens de fixation destinés à être fixés à la caisse du véhicule, la patte de fixation et la majorité des moyens de fixation étant disposés dans une même moitié longitudinale du pare-boue.
- La cloison décrit généralement un demi-tube ou un tronçon axial de demi-sphère, ou un tronçon axial de demi-cône.
- La patte de fixation présente une continuité d'épaisseur avec la cloison et/ou le manchon présente une continuité d'épaisseur avec la paroi.
- La patte de fixation forme une cavité interne dont la profondeur est supérieure ou égale à sa largeur moyenne. La largeur peut être mesurée transversalement.
- Le pare-boue comprend deux bords longitudinalement opposés, la bavette comprenant une forme de marche avec une contremarche épousant l'un des deux bords.
- La bavette est en contact de la surface externe tubulaire.
- La bavette, notamment le manchon, est disposée en dehors de l'espace interne.
- Le manchon et la patte de fixation comprennent des orifices de fixation coaxiaux.
- Le matériau de la cloison est moins élastique que le matériau de la bavette.
- La bavette forme généralement une plaque, et/ou est en dehors de l'espace interne, et/ou comprend un matériau élastique, notamment un élastomère.
- L'épaisseur moyenne de la cloison du pare-boue est inférieure ou égale à l'épaisseur moyenne de la paroi de la bavette.
- La longueur du manchon et/ou la longueur de la patte de fixation est/sont supérieure(s) ou égale(s) à 15 mm, préférentiellement supérieure(s) ou égale(s) à 25 mm. Les longueurs peuvent être mesurées longitudinalement.
- La patte de fixation comprend deux extrémités opposées, dont une extrémité jointe à la cloison et une extrémité libre comprenant une plaque en contact d'une plaque complémentaire du manchon.
- La patte de fixation comprend une butée traversant l'orifice du manchon, et/ou la patte de fixation traverse totalement le manchon.
- Les surfaces complémentaires de la bavette sont généralement parallèles et distantes d'au moins 10 mm, préférentiellement d'au moins 20 mm.

L'invention a également pour objet un passage de roue de véhicule, notamment automobile à quatre roues, le passage comprenant : un pare-boue avec une cloison décrivant généralement un demi-cercle, et qui délimite un espace interne destiné à recevoir une roue; et une bavette formant une paroi prolongeant la cloison du pare-boue vers le bas ; remarquable en ce que la cloison comprend une portion de fixation formant une saillie, ladite portion étant destinée à être fixée à la structure du véhicule, et en ce que la bavette comprend une portion d'assemblage qui fait saillie par rapport à la paroi et qui est emmanchée autour de la portion de fixation du pare-boue afin de s'y fixer.

L'invention a également pour objet un véhicule, notamment automobile, comprenant au moins une roue destinée à former une liaison au sol et un ensemble, remarquable en ce que l'ensemble est conforme à l'invention, optionnellement le pare-boue est un pare-boue arrière et la bavette est une bavette aérodynamique disposée à l'avant du pare-boue.

Selon des modes particuliers de réalisation, le véhicule peut comprendre une ou plusieurs des caractéristiques suivantes :
- Le manchon et la patte de fixation comprennent des orifices coaxiaux, et le véhicule comprend un axe de fixation avec une tête dont la largeur est inférieure ou égale à la largeur de l'orifice du manchon.
- Le véhicule comprend une aile arrière avec un enjoliveur d'aile qui épouse un bord du pare-boue; l'enjoliveur comprenant des moyens de fixation disposés longitudinalement au niveau du manchon.
- Le véhicule comprend une structure avec une branche transversale à laquelle le manchon et la patte de fixation sont fixés, le manchon formant une entretoise entre la branche transversale et la cloison.
- La patte de fixation s'étendant vers l'avant depuis la cloison.
- Le véhicule comprend une caisse, la bavette prolongeant la caisse vers le bas de 2cm à 15cm, préférentiellement de 3cm à 10cm, plus préférentiellement de 4cm à 8cm.
- Le diamètre de la tête est inférieur ou égal au diamètre du manchon, et/ou supérieur au diamètre de l'orifice de la patte de fixation.

L'invention tire profit de la présence d'une patte de fixation sur la cloison pour y emmancher la bavette via son manchon. Étant donné que la patte de fixation présente des moyens de fixation, le manchon profite de la présence de ces derniers pour être fixé simultanément lors du montage sur le véhicule. L'invention est économique puisqu'elle simplifie le montage de la bavette, tant sur le pare-boue que sur le véhicule. Le nombre de vis employé est réduit, tout comme les opérations de montage pour les fixations en X et en Z.

La forme des cônes permet un emmanchement, et éventuellement un ajustement bloqué. Les formes complémentaires de la patte de fixation et du manchon permettent une liaison robuste et durable. Cette configuration simplifie le pré-assemblage de la bavette et du pare-boue, avant montage sur un véhicule.

L'emploi d'une vis avec une tête plus petite que l'orifice du manchon permet de le pincer contre la carrosserie sans être tributaire de son fluage. Ce type d'assemblage est plus durable et simplifie le choix des matériaux à employer. Différentes configurations de manchons sont envisageables, car un manchon plus court que la patte associée peut suffire à les lier par emmanchement.

D'autres caractéristiques et avantages de la présente invention seront mieux compris à l'aide de la description donnée à titre d'exemple et en référence aux dessins parmi lesquels :
La figure 1 représente de profil un véhicule équipé d'un pare-boue à bavette selon l'invention.
La figure 2 illustre une vue isométrique du pare-boue et de la bavette selon l'invention.
La figure 3 esquisse une vue de face de la fixation de la bavette sur le pare-boue selon l'invention.
La figure 4 est une coupe de la fixation entre la bavette et le pare-boue selon l'invention, la coupe étant réalisée suivant l'axe 4-4 tracé sur la figure 3.

Dans la description qui va suivre, la direction longitudinale se réfère à la longueur du véhicule, soit à l'axe X. L'avant correspond au sens principal de déplacement du véhicule. L'axe transversal, ou axe Y, est perpendiculaire à la direction longitudinale.

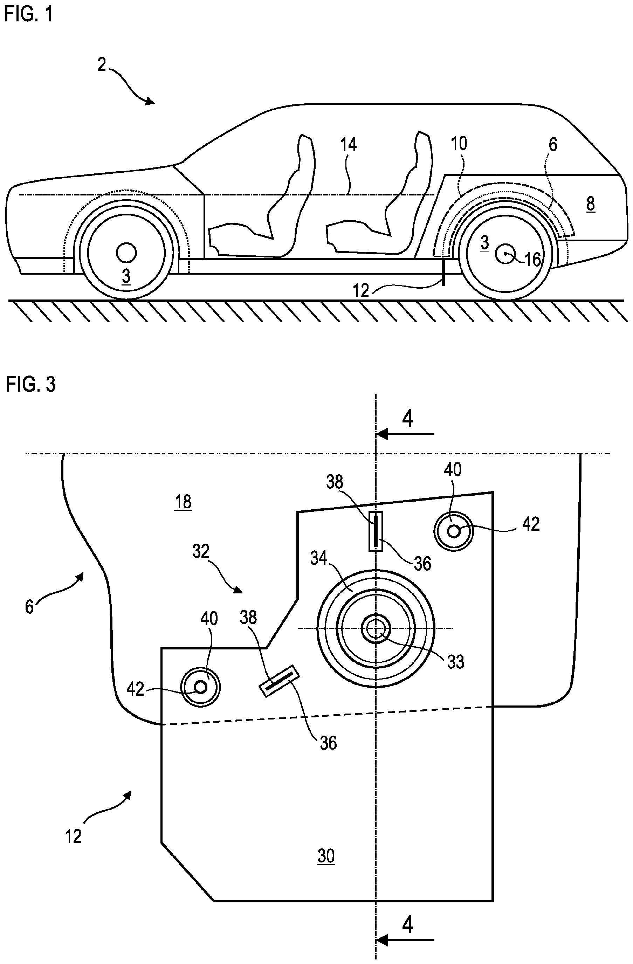

La figure 1 représente un véhicule 2, notamment un véhicule automobile. Ce véhicule 2 comporte quatre roues 3 formant des liaisons au sol. Elles sont adaptées pour supporter la masse du véhicule et de son éventuel chargement. Chaque roue 3 est placée dans un passage de roue équipé d'un pare-boue 6. Le passage de roue arrière est entouré d'une aile 8 de carrosserie qui cache le pare-boue 6 associé. L'aile 8 peut être un élément de carrosserie du véhicule, c'est-à-dire qu'il reste visible de l'extérieur du véhicule 2.

On remarque que la ou chaque aile 8 présente un enjoliveur 10 de passage de roue. L'enjoliveur 10 peut être fixé à la caisse du véhicule, en particulier à la doublure (non visible) d'aile. Il peut présenter une forme arquée de sorte à suivre le contour du passage de roue, et peut comporter des moyens de fixation répartis sur sa longueur. Ses moyens de fixation (non représentés) coopèrent avantageusement avec la doublure d'aile, ce qui peut influer sur la conception de cette dernière. En alternative ou en complément, il est envisageable de fixer l'enjoliveur à même l'aile 8.

Au moins un, préférentiellement plusieurs, ou chaque pare-boue 6 est équipé d'une bavette 12. Il peut s'agir de bavette arrière limitant les projections salissant la carrosserie du véhicule ; afin d'en préserver la qualité perçue. Chaque pare-boue 6 arrière est équipé d'une bavette 12 placée à l'avant. Il peut s'agir de bavettes aéro 12 - ou bavette aérodynamique, c'est-à-dire qui améliorent le comportement aérodynamique du véhicule 2. Leur présence améliore le Cx et/ou le Cz. Dès lors, le véhicule 2 peut présenter un comportement dynamique plus sûr, et/ou une consommation réduite.

La bavette 12 est en regard de la roue 3. Elle s'étend sensiblement verticalement vers le sol et présente une hauteur optimale afin d'éviter les frottements au sol dans les conditions normales d'utilisation du véhicule 2 et afin de limiter le pli de la bavette 12 à vitesse maximale. La bavette 12 prolonge le pare-boue 6 vers le bas. Elle forme une écope qui repousse le flux d'air s'orientant vers la roue 3 associée en marche avant. La bavette 12 peut comprendre un matériau élastique, éventuellement un élastomère tel de l'éthylène-propylène-diène monomère ou tout autre polymère équivalent.

L'axe longitudinal 14 et l'axe transversal 16 sont représentés en guise de repère. L'axe transversal 16 peut généralement correspondre à l'axe de rotation de la roue arrière 3, cet axe de rotation est entendu comme l'axe autour duquel la roue 3 tourne autour d'elle-même.

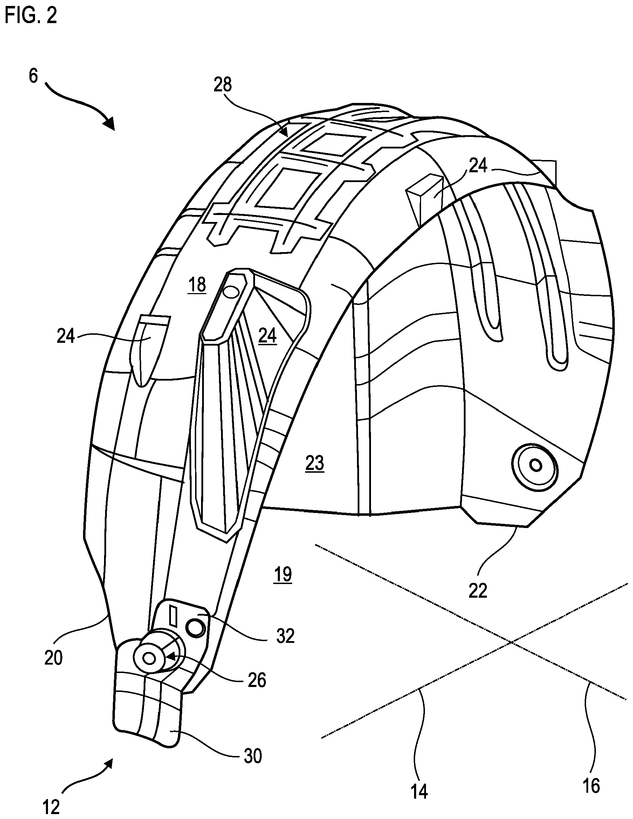

La figure 2 représente une vue isométrique d'un ensemble comportant un pare-boue 6 et une bavette aérodynamique 12 en position avant. L'ensemble est vu de l'avant. L'axe longitudinal 14 comme l'axe transversal 16 sont à nouveau tracés à des fins d'orientation.

Le pare-boue 6 comprend une cloison 18. Elle forme généralement une coque. Sa forme est courbe, en demi-cercle. Elle forme généralement un demi-tube, soit un tube coupé par un plan passant par son axe de symétrie. La cloison peut s'étendre sur plus d'un demi-cercle. Elle peut continuer vers le bas, en ligne droite ou en courbe. La cloison 18 peut délimiter un espace 19 destiné à loger partiellement la roue du véhicule. Cet espace 19 peut être un demi-cylindre prolongé vers le bas. Selon son épaisseur, la cloison 18 présente une surface extérieure tubulaire et une surface intérieure qui délimite l'espace 19. La cloison 18 peut présenter deux bords opposés longitudinalement, soit un bord avant 20 où est installée la bavette 12, et un bord arrière 22. Ces bords peuvent généralement s'étendre transversalement. La cloison 18 peut comprendre un fond 23, de forme généralement plane et perpendiculaire à l'axe transversal 16. Le pare-boue 6 peut présenter plusieurs pattes de fixation (24, 26) permettant sa fixation à la caisse du véhicule. Elles peuvent être généralement de forme conique et/ou creuse. Elles peuvent s'étendre perpendiculairement par rapport à la cloison 18 et/ou radialement par rapport à l'axe de rotation de la roue correspondante. Des pattes de fixation 24 s'étendent verticalement et assurent une fixation selon la direction verticale, ou fixation en Z. Les sommets de ces pattes 24 peuvent présenter une facette d'appui recevant un axe de fixation (non représenté) via un orifice afin de se lier à la caisse du véhicule. Une ou plusieurs pattes de fixation horizontale 26 peuvent être employées pour la fixation en X, ou fixation longitudinale. Ce type de patte prolonge longitudinalement la cloison 18.

Afin d'améliorer sa rigidité, le pare-boue 6 peut comporter une pluralité de nervures 28, qui peuvent former un entrecroisement. Les pattes de fixation (24 ; 26), tout comme les nervures 28 peuvent être co-moulées avec la cloison 18. Elles forment une entité venue de matière, par exemple par moulage d'un polymère. La cloison 18 peut comporter une peau d'épaisseur constante, qui peut former les pattes de fixation (24 ; 26) tout comme les nervures 28.

La bavette 12 présente une partie inférieure 30 qui prolonge la cloison 18 depuis son bord avant 20. Cette partie inférieure 30 peut être une partie libre, avec une extrémité inférieure libre. La partie supérieure 32 est fixée à la cloison 18 du pare-boue 6. Sa surface arrière est plaquée contre la surface extérieure de la cloison 18. La partie supérieure 32 est liée au pare-boue 6 au niveau de la patte de fixation horizontale 26.

La figure 3 représente une vue de face de la bavette 12 et de sa fixation sur le pare-boue 6. La présente vue est orientée selon l'axe longitudinal. Les orifices coaxiaux 33 communiquent l'un avec l'autre.

La partie supérieure 32 de la bavette 12 peut comprendre une portion d'assemblage, notamment un manchon 34 coopérant avec la patte de fixation horizontale du pare-boue 6. Ce manchon 34 peut être chaussé sur la patte de fixation. Il l'enveloppe. Il la masque depuis l'avant. En complément, la portion supérieure 32 peut présenter des fentes 36 dans lesquelles sont insérées des languettes 38. Les orientations et les positions des fentes 36, ainsi que de leurs languettes 38 correspondantes, permettent un blocage en rotation de la bavette 12 autour de la patte de fixation horizontale.

Le blocage en rotation peut être renforcé par des formes de bossages réalisés sur la bavette 12 et sur la cloison 18 du pare-boue 6. Les bossages 40 peuvent être de formes complémentaires. Par exemple, la cloison 18 comprend plusieurs bossages mâles qui sont imbriqués dans des bossages femelles 40 de la bavette 12. Des rivets 42, notamment des rivets pop, peuvent être fixés au travers des bossages 40. Ces rivets 42 permettent de pré assembler la bavette 12 au pare-boue 6, si bien qu'ils forment un ensemble pouvant être monté d'un seul tenant sur un véhicule. Cette opération peut être réalisée sur une chaîne de montage automatique, ce qui offre un gain économique.

Par ailleurs lors du pré-assemblage, les langues 38 peuvent servir de guide pour la présenter la bavette 12 et pour la positionner par rapport à la cloison 18. Leur assemblage devient donc plus simple.

La présence des bossages, et la présence des languettes sur la cloison sont indépendantes l'une de l'autre. De même, la présence de fente et la présence de bossages sont indépendantes l'une de l'autre.

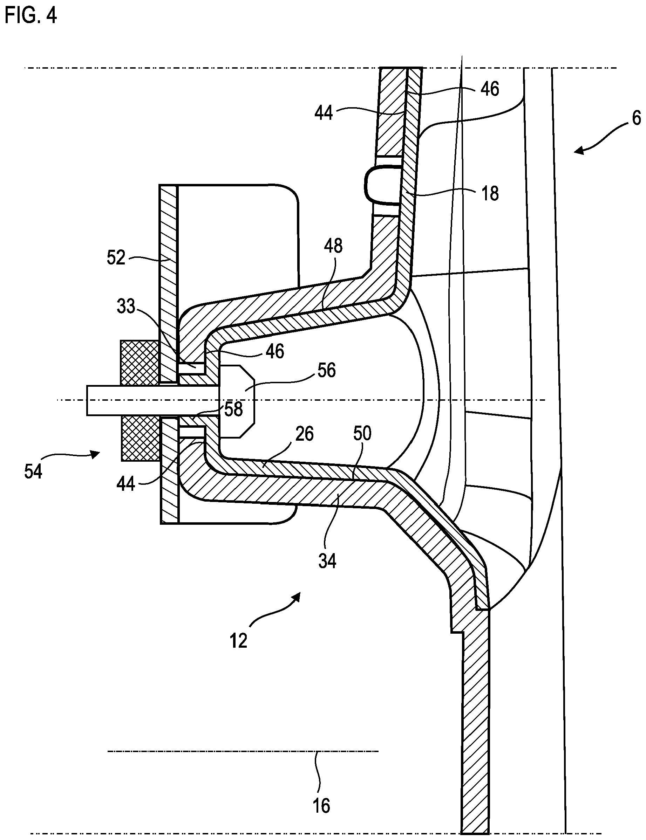

La figure 4 représente une coupe de la fixation du manchon 34 sur la patte de fixation horizontale 26 sur le pare-boue 6. La coupe est effectuée selon l'axe 4-4 tracé sur la figure 3. La figure 4 présente l'empilement de la bavette 12 sur la cloison 18.

La cloison 18 et la paroi de la bavette 12 présentent chacune une épaisseur constante. Le manchon 34 peut présenter une continuité d'épaisseur avec la paroi, de son côté la patte de fixation 26 peut présenter une continuité d'épaisseur avec la cloison 18. Par exemple, la paroi de la bavette 12 présente une épaisseur moyenne de 2,5 mm, et la cloison 18 du pare-boue 6 présente une épaisseur de 1,5 mm.

La paroi 18 comprend deux premières surfaces de contact 44 parallèles. La bavette 12 peut comprendre deux surfaces complémentaires 46 qui sont disposées aux extrémités du manchon 34 et qui sont chacune en appui d'une des deux premières surfaces de contact 46. Ceci permet un appui de la bavette 12 contre le pare-boue, et améliore le blocage.

Le manchon 34 comme la patte de fixation 26 peuvent être généralement tubulaires. Ils présentent chacun une poche allongée longitudinalement. Ils peuvent être sensiblement ovales afin de permettre un blocage en rotation lorsqu'ils sont emmanchés. La patte de fixation 26 peut comprendre une surface externe 48 généralement conique. Autour, le manchon 34 peut montrer une surface interne 50 généralement conique qui épouse sensiblement la surface externe conique 48. Ces surfaces peuvent être séparées par un jeu annulaire ; éventuellement localement. Alternativement ou optionnellement, ces surfaces peuvent être configurées pour permettre un blocage par cône morse.

La structure du véhicule peut présenter une branche transversale 52 de fixation. Elle peut présenter une forme de cornière avec une partie avant perpendiculaire à l'axe longitudinal 16. Le manchon 34 forme une entretoise entre la partie avant et la cloison 18. Il est en contact des deux. La partie avant comporte un orifice qui est aligné avec les orifices 33 de la patte de fixation 26 et du manchon 34. Ainsi, ces trois orifices 33 forment un passage continu.

Le pare-boue 6 et la bavette 12 sont fixés à l'aide de moyens de fixation, par exemple des moyens de serrage. Ces moyens peuvent comprendre une vis 54 avec une tête 56, et une tige filetée dont le diamètre est inférieur à celui de la tête 56. Le diamètre extérieur de la tête 56 est supérieur au diamètre intérieur de l'orifice 33 du manchon 34. Lors du serrage, la tête 56 n'est pas en appui contre le manchon 34. Ceci permet de s'affranchir du fluage intrinsèque du matériau du manchon 34, ou de son élasticité. Une butée tubulaire 58 de la patte de fixation 26 peut venir en appui contre la branche transversale 52. Ceci évite de solliciter le manchon lors du serrage.

## Revendications

1. Ensemble pour roue (3) de véhicule (2), l'ensemble comprenant :
- un pare-boue (6) avec une cloison (18) décrivant généralement un demi-cercle, et qui délimite un espace interne (19) destiné à recevoir une roue (3) du véhicule (2) ; et
- une bavette (12) formant une paroi prolongeant la cloison (18) du pare-boue (6) vers le bas ;
**caractérisé en ce que**
la cloison (18) comprend une patte de fixation (26) destinée à être fixée à la structure du véhicule (2), et qui fait saillie par rapport à la cloison (18), et **en ce que**
la bavette (12) comprend un manchon (34) emmanchée autour de la patte de fixation (26).

2. Ensemble selon la revendication 1, **caractérisé en ce que** le pare-boue (6) comprend deux premières surfaces de contact (44), la bavette (12) comprenant deux surfaces complémentaires (46) qui sont disposées aux extrémités du manchon (34) et qui sont chacune en contact d'une des deux premières surfaces de contact (44).

3. Ensemble selon l'une des revendications 1 à 2, **caractérisé en ce que** la patte de fixation (26) comprend une surface externe (48) généralement conique, et le manchon (34) comprend une surface interne (50) généralement conique qui épouse sensiblement la surface externe (48) conique.

4. Ensemble selon l'une des revendications 1 à 3, **caractérisé en ce que** la cloison (18) comprend deux surfaces opposées selon son épaisseur, dont une surface interne tubulaire et une surface externe généralement tubulaire, la patte de fixation (26) s'étendant perpendiculairement depuis ladite surface externe (44).

5. Ensemble selon l'une des revendications 1 à 4, **caractérisé en ce que** la bavette (12) comprend une fente (36), la cloison (18) comprenant une languette (38) traversant la fente (36) ; et la bavette (12) et la cloison (18) comprennent des bossages (40) complémentaires imbriqués l'un dans l'autre.

6. Ensemble selon l'une des revendications 1 à 5, **caractérisé en ce que** le pare-boue (6) comprend deux moitiés longitudinales et des moyens de fixation (24 ; 26) destinés à être fixés à la caisse du véhicule (2), la patte de fixation (26) et la majorité des moyens de fixation étant disposés dans une même moitié longitudinale du pare-boue (6).

7. Véhicule (2), notamment automobile, comprenant au moins une roue (3) destinée à former une liaison au sol et un ensemble, **caractérisé en ce que** l'ensemble est conforme à l'une des revendications 1 à 6, le pare-boue (6) est un pare-boue (6) arrière et la bavette (12) est une bavette aérodynamique (12) disposée à l'avant du pare-boue (6).

8. Véhicule (2) selon la revendication 7, **caractérisé en ce que** le manchon (34) et la patte de fixation (26) comprennent des orifices coaxiaux, et le véhicule (2) comprend un axe de fixation avec une tête dont la largeur est inférieure ou égale à la largeur de l'orifice du manchon (34).

9. Véhicule (2) selon l'une des revendications 7 à 8, **caractérisé en ce qu'**il comprend une aile arrière (8) avec un enjoliveur (10) d'aile qui épouse un bord du pare-boue (6); l'enjoliveur (10) comprenant des moyens de fixation disposés longitudinalement au niveau du manchon (34).

10. Véhicule (2) selon l'une des revendications 7 à 9, **caractérisé en ce qu'**il comprend une structure avec une branche transversale (52) à laquelle le manchon (34) et la patte de fixation (26) sont fixés, le manchon (34) formant une entretoise entre la branche transversale (52) et la cloison (18).

## Patentansprüche

1. Anordnung für ein Rad (3) eines Fahrzeugs (2), wobei die Anordnung Folgendes umfasst:
- einen Kotflügel (6) mit einer Trennwand (18), die im Allgemeinen einen Halbkreis beschreibt, und die einen Innenraum (19) abgrenzt, der dazu bestimmt ist, ein Rad (3) des Fahrzeugs (2) aufzunehmen; und
- eine Spritzklappe (12), die eine Wand bildet, die die Trennwand (18) des Kotflügels (6) nach unten verlängert;
**dadurch gekennzeichnet, dass**
die Trennwand (18) eine Befestigungspratze (26) umfasst, die dazu bestimmt ist, an dem Aufbau des Fahrzeugs (2) befestigt zu sein, und die bezüglich der Trennwand (18) vorragt, und dadurch, dass die Spritzklappe (12) einen Stutzen (34) umfasst, der um die Befestigungspratze (26) aufgeschrumpft ist.

2. Anordnung nach Anspruch 1, **dadurch gekennzeichnet, dass** der Kotflügel (6) zwei erste Kontaktoberflächen (44) umfasst, die Spritzklappe (12) zwei komplementäre Oberflächen (46) umfasst, die an den Enden des Stutzens (34) angeordnet sind und die jeweils mit einer der zwei ersten Kontaktoberflächen (44) in Kontakt sind.

3. Anordnung nach einem der Ansprüche 1 bis 2, **dadurch gekennzeichnet, dass** die Befestigungspratze (26) eine Außenoberfläche (48) umfasst, die im Allgemeinen konisch ist, und dass der Stutzen (34) eine Innenoberfläche (50) umfasst, die im Allgemeinen konisch ist und sich im Wesentlichen an die konische Außenoberfläche (48) legt.

4. Anordnung nach einem der Ansprüche 1 bis 3, **dadurch gekennzeichnet, dass** die Trennwand (18) zwei entgegengesetzte Oberflächen entlang ihrer Stärke umfasst, darunter eine röhrenförmige Innenoberfläche und eine im Allgemeinen röhrenförmige Außenoberfläche, wobei sich die Befestigungspratze (26) senkrecht ausgehend von der Außenoberfläche (44) erstreckt.

5. Anordnung nach einem der Ansprüche 1 bis 4, **dadurch gekennzeichnet, dass** die Spritzklappe (12) einen Schlitz (36) umfasst, die Trennwand (18) eine Lasche (38), die den Schlitz (36) durchquert, umfasst; und die Spritzklappe (12) und die Trennwand (18) komplementäre Höcker (40) umfassen, die ineinander verschachtelt sind.

6. Anordnung nach einem der Ansprüche 1 bis 5, **dadurch gekennzeichnet, dass** der Kotflügel (6) zwei Längshälften und Befestigungsmittel (24; 26) umfasst, die dazu bestimmt sind, an der Struktur des Fahrzeugs (2) befestigt zu sein, wobei die Befestigungspratze (26) und der Großteil der Befestigungsmittel in derselben Längshälfte des Kotflügels (6) angeordnet sind.

7. Fahrzeug (2), insbesondere Kraftfahrzeug, das mindestens ein Rad (3) umfasst, das dazu bestimmt ist, eine Verbindung auf dem Boden zu bilden, und eine Anordnung, **dadurch gekennzeichnet, dass** die Anordnung einem der Ansprüche 1 bis 6 entspricht, der Kotflügel (6) ein Heckkotflügel (6) ist, und die Spritzklappe (12) eine aerodynamische Spritzklappe (12), die vor dem Kotflügel (6) angeordnet ist, ist.

8. Fahrzeug (2) nach Anspruch 7, **dadurch gekennzeichnet, dass** der Stutzen (34) und die Befestigungspratze (26) koaxiale Öffnungen umfassen, und dass das Fahrzeug (2) eine Befestigungsachse mit einem Kopf umfasst, dessen Breite kleiner oder gleich der Breite der Öffnung des Stutzens (34) ist.

9. Fahrzeug (2) nach einem der Ansprüche 7 bis 8, **dadurch gekennzeichnet, dass** es einen Heckflügel (8) mit einer Flügelzierleiste (10) umfasst, die sich an einen Rand des Kotflügels (6) legt; wobei die Zierleiste (10) Befestigungsmittel umfasst, die längs in dem Bereich des Stutzens (34) angeordnet sind.

10. Fahrzeug (2) nach einem der Ansprüche 7 bis 9, **dadurch gekennzeichnet, dass** es einen Aufbau mit einem Querschenkel (52) umfasst, an dem der Stutzen (34) und die Befestigungspratze (26) befestigt sind, wobei der Stutzen (34) einen Abstandhalter zwischen dem Querschenkel (52) und der Trennwand (18) bildet.

## Claims

1. An assembly for a wheel (3) of a vehicle (2), the assembly including:
- a mudguard (6) with a partition (18) describing generally a semi-circle, and which delimits an internal space (19) intended to receive a wheel (3) of the vehicle (2); and
- a flap (12) forming a wall extending the partition (18) of the mudguard (6) downwards;
**characterized in that**
the partition (18) includes a fastening tab (26) intended to be fastened to the structure of the vehicle (2), and which projects with respect to the partition (18),
and **in that**
the flap (12) includes a sleeve (34) fitted around the fastening tab (26).

2. The assembly according to Claim 1, **characterized in that** the mudguard (6) includes two first contact surfaces (44), the flap (12) including two complementary surfaces (46) which are disposed at the ends of the sleeve (34) and which are each in contact with one of the two first contact surfaces (44).

3. The assembly according to one of Claims 1 to 2, **characterized in that** the fastening tab (26) includes a generally conical external surface (48), and the sleeve (34) includes a generally conical internal surface (50) which substantially fits closely the external conical surface (48).

4. The assembly according to one of Claims 1 to 3, **characterized in that** the partition (18) includes two opposite surfaces along its thickness: an internal tubular surface and a generally tubular external surface, the fastening tab (26) extending perpendicularly from said external surface (44).

5. The assembly according to one of Claims 1 to 4, **characterized in that** the flap (12) includes a slot (36), the partition (18) including a tongue (38) passing through the slot (36); and the flap (12) and the partition (18) include complementary bosses (40) fitted one in the other.

6. The assembly according to one of Claims 1 to 5, **characterized in that** the mudguard (6) includes two longitudinal halves and fastening means (24; 26) intended to be fastened to the body of the vehicle (2), the fastening lug (26) and the majority of the fastening means being disposed in the same longitudinal half of the mudguard (6).

7. A vehicle (2), in particular a motor vehicle, including at least one wheel (3) intended to form a connection with the ground and an assembly, **characterized in that** the assembly is in accordance with one of Claims 1 to 6, the mudguard (6) is a rear mudguard (6) and the flap (12) is an aerodynamic flap (12) disposed at the front of the mudguard (6).

8. The vehicle (2) according to Claim 7, **characterized in that** the sleeve (34) and the fastening tab (26) include coaxial openings, and the vehicle (2) includes a fastening axis with a head, the width of which is less than or equal to the width of the opening of the sleeve (34).

9. The vehicle (2) according to one of Claims 7 to 8, **characterized in that** it includes a rear wing (8) with a wing trim (10) which closely fits an edge of the mudguard (6); the trim (10) including fastening means disposed longitudinally at the level of the sleeve (34) .

10. The vehicle (2) according to one of Claims 7 to 9, **characterized in that** it includes a structure with a transverse branch (52) to which the sleeve (34) and the fastening tab (26) are fastened, the sleeve (34) forming a crosspiece between the transverse branch (52) and the partition (18).
